# EUROPEAN PATENT SPECIFICATION

(11) **EP 2 059 155 B1**
(45) Date of publication and mention of the grant of the patent: **04.08.2010**
(21) Application number: 07827664.9
(22) Date of filing: 04.09.2007
(51) Int. Cl.: A47J 31/40

(54) **DISPENSING DEVICE FOR LOOSE PRODUCTS FOR THE PREPARATION OF BEVERAGES, AND MACHINE CONTAINING SAID DISPENSING DEVICE**
AUSGABEVORRICHTUNG FÜR LOSE PRODUKTE ZUR HERSTELLUNG VON GETRÄNKEN UND MASCHINE MIT EINER SOLCHEN AUSGABEVORRICHTUNG
DISTRIBUTEUR DE PRODUITS EN VRAC POUR LA PRÉPARATION DE BOISSONS ET MACHINE CONTENANT LEDIT DISTRIBUTEUR

(30) Priority: 08.09.2006 IT FI20060222
(43) Date of publication of application: 20.05.2009
(73) Proprietor: Saeco IPR Limited, Dublin 12 (IE)
(72) Inventor: RIGHETTI, Marco, I-40032 Camugnano, Bologna (IT); TALINI, Marco, I-40046 Porretta Terme, Bologna (IT)
(74) Representative: Damen, Daniel Martijn
(86) International application number: PCT/IT2007/000610
(87) International publication number: WO 2008/029431

(56) References cited:
- EP-A- 1 176 402
- DE-A1- 10 312 013
- US-A- 3 710 991

## Description

### Technical field

The present invention relates to a dispenser to dispense loose products, in particular although not exclusively, powdered products and preferably, although not exclusively, freeze-dried powdered products for the preparation of beverages or other substantially liquid edible products.

### State of the art

To prepare beverages, such as coffee, tea and also broth or other liquid or substantially liquid edible products, loose powdered products, normally freeze-dried, are frequently used, which are dispensed in predetermined doses from a dispenser towards an area in which the beverage is prepared inside a dispensing machine, normally a vending machine.

The loose product, for instance in powder, is contained in a hopper at the base of which is a screw feeder which, rotating, feeds a quantity of powdered or other loose product towards a dispensing opening, from which the powder is dispensed to a unit for preparation of the beverage by adding hot water. See WO-A-2006/079580.

IT-B-1093232 describes a machine for automatic dispensing hot beverages using freeze-dried powders, wherein the freeze-dried powder is dispensed by means of a rotating cylinder positioned inside a seat provided in the base of a hopper. The rotating cylinder has a series of cells of predetermined dimensions, so that rotation of said cylinder for a specific number of turns or fractions of turn allows a predefined dose of the powdered product to be dispensed towards a conduit into which hot water also flows, with a metering system.

These prior art devices have considerable drawbacks due to the presence of steam coming from the area in which the beverage is prepared, directly below the dispensing opening of the freeze-dried powder or other loose product. The steam raises towards the area of the dispensing opening of the freeze-dried powder. The latter, being hygroscopic, absorbs the water that condenses and forms lumps of powder, which results in malfunctioning and clogging of the dispensing device and shut-down of the machine. Moreover, the device illustrated in the Italian patent IT-B-1093232 has the drawback that the steam which condenses on the rotating cylinder is transferred directly inside the hopper of the freeze-dried powders due to rotation of the metering cylinder.

In many machines, it is also necessary to dispense additional products besides the basic products for preparation of the beverage or other edible product. For example and typically (although not exclusively), it may be necessary to dispense dosable quantities of sugar, sweeteners or other substances.

US-A-3,710,991 discloses a fluent material dispenser including a container for a fluent material and an auger for feeding said fluent material towards an aperture. A sliding closure member is provided, which keeps the outlet aperture closed. A first motor controls the motion of the auger and a second motor controls the movement of the sliding closure member. When a certain amount of material shall be dispensed, the first motor is energized and opens the sliding closure member. A cam is arranged on the motor shaft of the second motor and a follower is combined to said cam. The cam-follower arrangement causes the first motor to be energized once the sliding closure member has been brought into the open position. This known device does not provide a satisfactory barrier against moisture during dispensing of the material.

Other loose material dispenser devices specifically designed for beverage preparing machines are disclosed in EP-A-848925; US-A-4,572,060; EP-A-1176402; EP-A-331271.

DE-A-10312013 discloses a granular material dispensing device which is designed to dispense fluent material from a container in a gaseous flow for transportation. The device includes an auger and, in an intermediate position along the axial development of the auger, a rotating valve. The rotating valve and the auger are independently motorized by means of separate electric motors, each of which is controlled by means of specific electronic control devices.

### Object and summary of the invention

An object of the present invention is to produce a dispensing device that overcomes entirely or in part the drawbacks of prior art devices.

In substance, according to the invention, a dispenser is provided wherein a screw feeder is positioned in the base of a hopper containing the loose product to feed the loose product towards a dispensing opening. Moreover, contrary to what occurs in conventional dispensing devices, the dispensing opening is not free, which would cause the steam to raise and condense in the areas in which the freeze-dried powder or other product, such as sugar or the like, is present, but positioned therein is a valve, defining at least one cell, which closes the dispensing opening to prevent steam from raising therein and thus prevent the formation of lumps of freeze-dried powder or other loose product contained in the dispenser, and also moves to dispense the product towards the area in which the beverage or the like is prepared. The screw feeder is produced and positioned to feed the loose product to the cell or cells of the valve. The moving valve can be a slide valve, with one or more cells. Nonetheless, the valve is preferably a rotary valve with one or preferably a plurality of cells.

Besides preventing steam from raising towards the loose product and in general entry of humidity, also atmospheric (particularly useful in the case of freeze-dried powders), the moving valve can attain further advantages such as: preventing the accidental feed of product caused by movements of the hopper and to vibrations; prevent or reduce exposure of the loose product to external agents and the penetration, for instance of insects, thereby ensuring increased hygiene.

Advantageously, when the valve is a rotary valve, rotation of the valve and of the screw feeder are controlled with a ratio determined so that the volume of loose product fed by the screw feeder substantially precisely fills the cells of the rotating valve, thereby obtaining efficient metering of the powdered product.

The valve can be configured in any way, and in particular with a rotating body and cells distributed along the circumferential extension of the body. However, according to an advantageous embodiment, the valve is designed as a blade valve, i.e. with a central body and radial blades defining, between consecutive pairs of blades, respective cells for the loose product.

Housing of the rotary valve in the dispensing opening in substance makes it possible to define a moving barrier which on the one hand allows the loose product dispensed by the screw feeder to be delivered towards the area in which the beverage is dispensed and on the other prevents steam from raising towards the area in which the loose product is contained.

In an advantageous embodiment, the valve rotates about an axis, which is substantially parallel to the rotation axis of the screw feeder and the two elements can be advantageously connected to each other by a mechanical transmission member, such as a pair of gears. However, it would also be possible for each of the two elements (screw feeder and rotary valve) to be equipped with a respective motor. Nonetheless, by providing members to transmit motion from one to the other of the two elements it is possible to produce a less expensive dispenser, equipped with a single motor for both screw feeder rotation and valve rotation. Preferably, the motor is connected to the screw feeder shaft, directly or indirectly through a kinematic transmission, and the screw feeder in turn transmits motion to the rotary valve. In an advantageous embodiment, the mechanical transmission between screw feeder and valve is such that the rotation speed of the screw feeder is lower than the rotation speed of the valve.

According to a possible embodiment, the valve is positioned in a housing, which has a cross section for the entry of the loose product towards the cells of the valve which is greater than the cross section for delivery of the loose product, thereby obtaining an improved barrier effect against the raising of steam towards the screw feeder.

The invention also relates to a machine for the preparation of beverages or the like using loose products, in particular freeze-dried products or the like, and hot water, comprising a dispenser of the type described.

Further advantageous characteristics of the device according to the invention will be described hereunder with reference to a possible embodiment of the invention.

### Brief description of the drawings

The present invention will be better understood by following the description and accompanying drawing, which shows a non-limiting practical embodiment of the invention. More specifically:

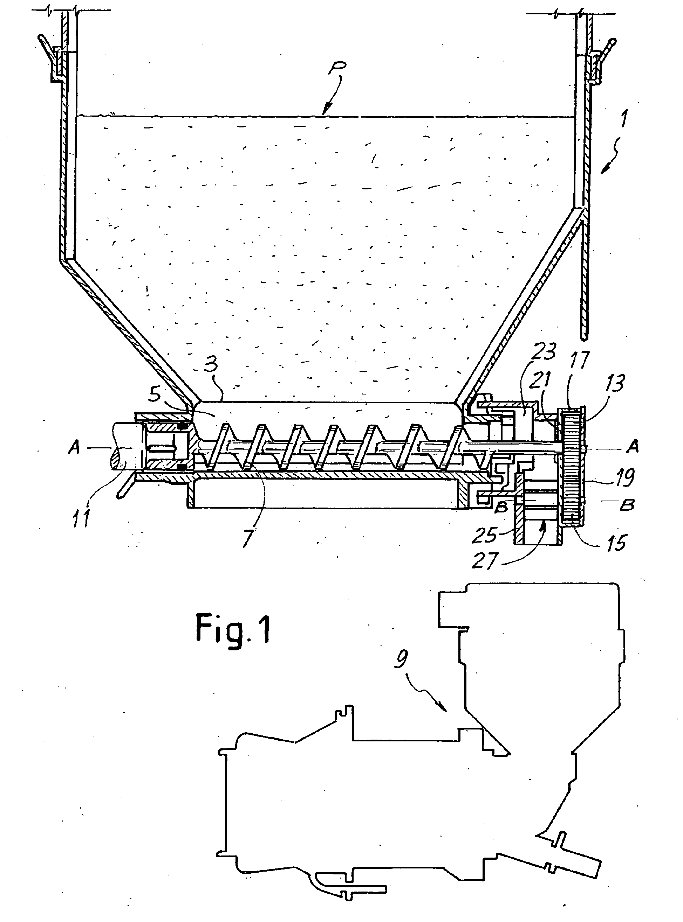

Figure 1 shows a section according to a median vertical plane of the hopper with the screw feeder and the dispensing opening containing the distribution valve;
Figure 2 shows an axonometric view of the open dispensing opening, with the valve housed therein;
Figure 3 shows an axonometric view of the screw feeder, of the block containing the dispensing opening and of the gear transmission between the screw feeder and the rotary valve.

### Detailed description of an embodiment of the invention

A detailed description of an embodiment of the invention will be provided here below, with a rotary valve in the form of blade valve. Although this configuration has particular advantages and is currently preferable, other embodiments of the invention are possible, such as with a slide valve, i.e. provided with an alternative movement and equipped, for instance, with only one cell or also with several cells to receive the product to be dispensed.

In the drawing, the numeral. 1 indicates a hopper containing a loose product, such as a freeze-dried powder, sugar or the like, indicated with P. The base of the hopper has an opening 3 towards a compartment 5, positioned inside which is a screw feeder 7 rotating about an axis A-A which, when the dispensing device 1 is installed in a machine to prepare beverages, can be in a substantially horizontal position.

Positioned under the dispenser 1 is a unit 9 to prepare beverages by mixing the product P dispensed by the device 1 in water. The parts of the machine to prepare the beverage in which the actual preparation of the beverage takes place are not of interest herein and are known per se and consequently will not be illustrated and described in further detail.

The screw feeder 7 is operated by a motor 11 positioned at one end thereof, while at the opposite end the shaft 7A of the screw feeder is equipped with a first gear 13 meshing with a second gear 15 below. The two gears 13, 15 are housed in a chamber 17 frontally closed by a cover 19 and separated by means of a diaphragm 21 from a compartment 23, into which the loose product P is pushed by the screw feeder 7, and from a dispensing opening 25 below. Positioned in the dispensing opening 25 is a rotary valve 27 on the shaft of which a gear wheel 15 is keyed.

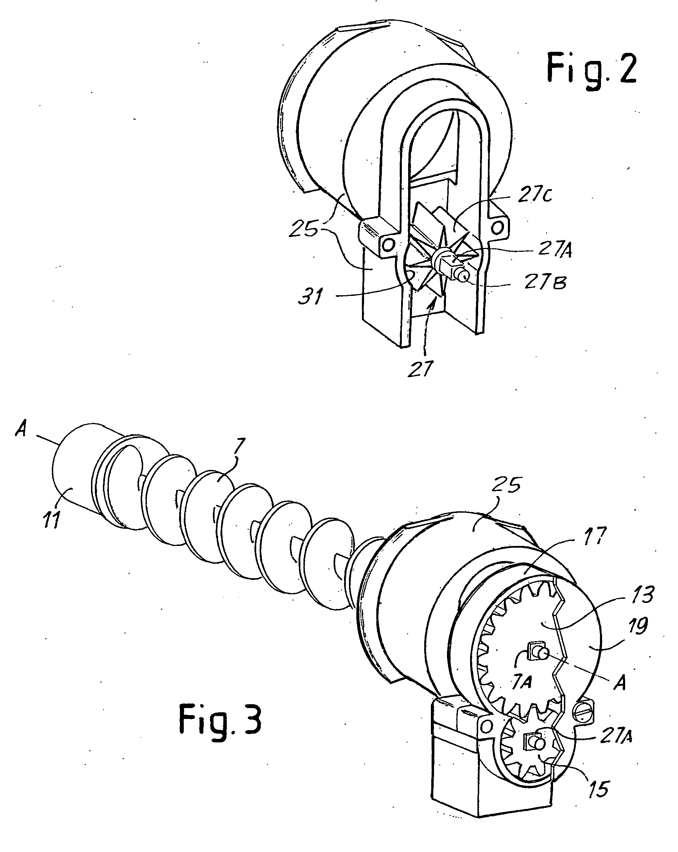

As can be seen in particular in Figure 2, the valve 27 is in substance a blade valve, which has a main body 27A produced in one piece with the shaft 27B onto which the gear wheel 15 is keyed. The valve 27 is housed inside a seat 31, which has a substantially rectangular inlet cross section of greater dimensions in relation to the outlet cross section, under the valve 27. This difference in section is produced, in this embodiment, through suitably shaping the sidewall defining the dispensing opening 25. It would also be possible for the inlet and outlet sections to be produced with the same shape and dimension.

As is understood from the description above, rotation of the motor 11 causes rotation of the screw feeder 7 about the axis A-A thereof and, as a consequence of transmission through the gears 13, 15, rotation of the metering valve 27 about the axis B-B thereof, substantially parallel to the axis A-A. As the diameter of the gear 13 is greater than that of the gear 15, the rotation speed of the valve 27 will be greater than the rotation speed of the screw feeder 7.

The screw feeder rotates to dispense towards the dispensing opening 25 a dose of loose product P determined by the number of turns or fractions of turn implemented by the screw feeder 7 each time it is operated. This product is delivered through the dispensing opening 25 by controlled rotation of the rotary valve 27 towards the area 9 in which the beverage is prepared. The radial blades 27C which project from the central body or central core 27A of the valve 27 define compartments to receive the loose product and dispense it towards the opening 25. The blades 27C close the cross section of the dispensing opening 25, so that humidity cannot penetrate therethrough towards the area containing the loose product P. Any steam that condenses on the blades 27C is in very small quantities and in any case does not concern the content of the hopper 1, but remains limited inside the area of the dispensing opening 25.

It is understood that the drawing only shows an example of embodiment of the invention, which can vary in forms and arrangements without however departing from the scope of the concept underlying the invention. Any reference numerals in the appended claims are provided to facilitate reading of the claims with reference to the description and to the drawing, and do not in any way limit the scope of protection.

## Claims

1. A dispenser (1) of loose products for the preparation of beverages or the like, comprising a hopper to contain the loose product, and a screw feeder (7) to feed the loose product from said hopper (1) towards a dispensing opening (3); wherein positioned in said dispensing opening (3) is a shut-off valve (27), which closes said dispensing opening (3), the screw feeder (7) being designed and arranged to feed the loose product towards said valve (27); **characterized in that**: said valve (27) is a rotary valve including at least one cell to receive a dose of loose product, the rotation of said valve (27) causing delivery of the loose product, and that said screw feeder (7) and said valve (27) are mechanically connected with motion transmission members (13, 15), such that said valve (27) rotates along with said screw feeder (7).

2. Dispenser as claimed in claim 1, wherein said valve (27) comprises a plurality of cells.

3. Dispenser as claimed in claim 1 or 2, wherein said valve (27) is a blade valve, respective cells being defined between pairs of consecutive blades (27C).

4. Dispenser as claimed in any one of the preceding claims, wherein said valve (27) rotates about an axis substantially parallel to the axis of rotation of the screw feeder (7).

5. Dispenser as claimed in any one of the preceding claims, wherein said screw feeder (7) is motorized and wherein a single motor (11) controls the rotation of said screw feeder (7) and said valve (27).

6. Dispenser as claimed in claim 5, wherein said screw feeder (7) and said valve (27) are connected by means of a gear transmission (13, 15).

7. Dispenser as claimed in one or more of the previous claims, wherein the rotation speed of the screw feeder (7) is below the rotation speed of the valve (27).

8. Dispenser as claimed in one or more of the preceding claims,
wherein said valve (27) is positioned in a housing (31) which has an inlet cross section for the loose product towards the cells of the valve which is greater than the outlet cross section.

9. Dispenser as claimed in one or more of the preceding claims, **characterized in that** said screw feeder (7) ends in a compartment (23) where said loose product is fed by said screw feeder (7); said rotating valve (27) being arranged underneath said compartment (23).

10. Dispenser as claimed in claim 9, **characterized in that** the screw feeder (8) has a shaft extending through said compartment (23) into a chamber (17), wherein said motion transmission members (13, 15) are arranged.

11. A beverage vending machine including at least a container for a loose product; a beverage preparing unit; and a dispenser (1) for dispensing said loose product to said beverage preparing unit; **characterized by** a dispenser according to one or more of claims 1 to 10.

12. A machine for the preparation of beverages or the like using loose products, comprising a dispenser (1) as claimed in one or more of claims 1 to 10.

## Patentansprüche

1. Abgabevorrichtung (1) für lose Produkte zur Zubereitung von Getränken o.ä., mit einem Zuführbehälter zur Aufnahme des losen Produkts sowie einem Schneckendosierer (7) zum Zuführen des losen Produkts von dem Zuführbehälter (1) zu einer Abgabeöffnung (3), wobei in der Abgabeöffnung (3) ein Absperrventil (27) positioniert ist, welches die Abgabeöffnung (3) schließt, wobei der Schneckendosierer (7) so ausgeführt und angeordnet ist, dass er das lose Produkt zu dem Ventil (27) hin leitet, **dadurch gekennzeichnet, dass** das Ventil (27) ein drehbares Ventil mit mindestens einer Zelle zur Aufnahme einer Dosis des losen Produkt ist, wobei die Drehung des Ventils (27) eine Zuführung des losen Produkts bewirkt, und dass der Schneckendosierer (7) und das Ventil (27) mit Bewegungsübertragungselementen (13, 15) mechanisch verbunden sind, so dass sich das Ventil (27) zusammen mit dem Schneckendosierer (7) dreht.

2. Abgabevorrichtung nach Anspruch 1, wobei das Ventil (27) mehrere Zellen umfasst.

3. Abgabevorrichtung nach Anspruch 1 oder 2, wobei das Ventil (27) ein Lamellenventil ist, wobei jeweilige Zellen zwischen Paaren von aufeinander folgenden Lamellen (27C) definiert sind.

4. Abgabevorrichtung nach einem der vorangegangenen Ansprüche, wobei sich das Ventil (27) im Wesentlichen parallel zu der Rotationsachse des Schneckendosierers (7) um eine Achse dreht.

5. Abgabevorrichtung nach einem der vorangegangenen Ansprüche, wobei der Schneckendosierer (7) mit Motorantrieb vorgesehen ist, und wobei ein einzelner Motor (11) die Drehung des Schneckendosierers (7) und des Ventils (27) steuert.

6. Abgabevorrichtung nach Anspruch 5, wobei der Schneckendosierer (7) und das Ventil (27) durch eine Getriebeübersetzung (13, 15) miteinander verbunden sind.

7. Abgabevorrichtung nach einem der vorangegangenen Ansprüche, wobei die Rotationsgeschwindigkeit des Schneckendosierers (7) unterhalb der Rotationsgeschwindigkeit des Ventils (27) liegt.

8. Abgabevorrichtung nach einem der vorangegangenen Ansprüche" wobei das Ventil (27) in einem Gehäuse (31) positioniert ist, welches einen Einlassöffnungsquerschnitt für das lose Produkt zu den Zellen des Ventils hin aufweist, der größer als der Auslassöffnungsquerschnitt ist.

9. Abgabevorrichtung nach einem der vorangegangenen Ansprüche, **dadurch gekennzeichnet, dass** der Schneckendosierer (7) in einem Kompartment (23) endet, in das von dem Schneckendosierer (7) das lose Produkt geleitet wird, wobei das drehbare Ventil (27) unterhalb dieses Kompartments (23) angeordnet ist.

10. Abgabevorrichtung nach Anspruch 9, **dadurch gekennzeichnet, dass** der Schneckendosierer (7) eine Welle aufweist, die sich durch das Kompartment (23) in eine Kammer (17) erstreckt, in welcher die Bewegungsübertragungselemente (13, 15) angeordnet sind.

11. Getränkeautomat mit zumindest einem Behälter für ein loses Produkt, einer Getränkezubereitungseinheit sowie einer Abgabevorrichtung (1) zur Abgabe des losen Produkts an die Getränkezubereitungseinheit, **gekennzeichnet durch** eine Abgabevorrichtung nach einem der Ansprüche 1 bis 10.

12. Maschine zur Zubereitung von Getränken o.ä. unter Verwendung des losen Produkts, mit einer Abgabevorrichtung (1) nach einem der Ansprüche 1 bis 10.

## Revendications

1. Distributeur (1) de produits en vrac servant à la préparation de boissons ou similaires, comprenant une trémie pour contenir le produit en vrac et un alimentateur à vis (7) pour amener le produit en vrac de ladite trémie (1) vers une ouverture de distribution (3) ; dans lequel une soupape d'arrêt (27) qui ferme ladite ouverture de distribution (3) est positionnée dans ladite ouverture de distribution (3), l'alimentateur à vis (7) étant conçu et agencé pour amener le produit en vrac vers ladite soupape (27) ; **caractérisé en ce que** ladite soupape (27) est une soupape rotative comprenant au moins une cellule pour recevoir une dose de produit en vrac, la rotation de ladite soupape (27) provoquant la distribution du produit en vrac et ledit alimentateur à vis (7) et ladite soupape (27) sont reliés mécaniquement aux éléments de transmission de mouvement (13, 15), de telle sorte que ladite soupape (27) tourne avec ledit alimentateur à vis (7).

2. Distributeur selon la revendication 1, dans lequel ladite soupape (27) comprend une pluralité de cellules.

3. Distributeur selon la revendication 1 ou 2, dans lequel ladite soupape (27) est une soupape à lamelles, des cellules respectives étant définies entre des paires de lamelles consécutives (27C).

4. Distributeur selon l'une quelconque des revendications précédentes, dans lequel ladite soupape (27) tourne autour d'un axe essentiellement parallèle à l'axe de rotation de l'alimentateur à vis (7).

5. Distributeur selon l'une quelconque des revendications précédentes, dans lequel ledit alimentateur à vis (7) est motorisé et dans lequel un seul moteur (11) commande la rotation dudit alimentateur à vis (7) et de ladite soupape (27).

6. Distributeur selon la revendication 5, dans lequel ledit alimentateur à vis (7) et ladite soupape (27) sont reliés au moyen d'une transmission par engrenages (13, 15).

7. Distributeur selon une ou plusieurs des revendications précédentes, dans lequel la vitesse de rotation de l'alimentateur à vis (7) est inférieure à la vitesse de rotation de la soupape (27).

8. Distributeur selon une ou plusieurs des revendications précédentes, dans lequel ladite soupape (27) est positionnée dans un logement (31) qui a une section transversale d'entrée pour le produit en vrac vers les cellules de la soupape qui est plus grande que la section transversale de sortie.

9. Distributeur selon une ou plusieurs des revendications précédentes, **caractérisé en ce que** ledit alimentateur à vis (7) se termine dans un compartiment (23) où ledit produit en vrac est amené par ledit alimentateur à vis (7) ; ladite soupape rotative (27) étant agencée sous ledit compartiment (23).

10. Distributeur selon la revendication 9, **caractérisé en ce que** l'alimentateur à vis (7) présente un arbre s'étendant à travers ledit compartiment (23) dans une chambre (17) dans laquelle lesdits éléments de transmission de mouvement (13, 15) sont agencés.

11. Distributeur de boissons comprenant au moins un conteneur pour un produit en vrac ; une unité de préparation de boisson ; et un distributeur (1) pour la distribution dudit produit en vrac à ladite unité de préparation de boisson ; **caractérisé par** un distributeur selon une ou plusieurs des revendications 1 à 10.

12. Machine de préparation de boissons ou similaires utilisant des produits en vrac, comprenant un distributeur (1) selon une ou plusieurs des revendications 1 à 10.
